(19) **Europäisches Patentamt**

**European Patent Office**

**Office européen des brevets**

(11) **EP 1 295 107 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(21) Anmeldenummer: **01953957.6**

(22) Anmeldetag: **25.05.2001**

(51) Int Cl.:
**G01N 21/55** (2006.01)   **G01N 21/03** (2006.01)

(86) Internationale Anmeldenummer:
**PCT/EP2001/005983**

(87) Internationale Veröffentlichungsnummer:
**WO 2002/001202 (03.01.2002 Gazette 2002/01)**

(54) **VORRICHTUNG FÜR DIE KOMBINIERTE UND GLEICHZEITIGE BENUTZUNG MEHRERER PHYSIKALISCHER MESSMETHODEN ZUR ANALYSE DER KOMPONENTEN EINES FLÜSSIGEN MEHRSTOFFGEMISCHES**

DEVICE FOR COMBINED AND SIMULTANEOUS USE OF SEVERAL MEASURING METHODS FOR ANALYSING COMPONENTS OF A LIQUID MIXTURE OF SEVERAL SUBSTANCES

DISPOSITIF PERMETTANT L'UTILISATION COMBINEE ET SIMULTANEE DE PLUSIEURS METHODES PHYSIQUES DE MESURE POUR L'ANALYSE DES CONSTITUANTS D'UN MELANGE LIQUIDE DE PLUSIEURS SUBSTANCES

(84) Benannte Vertragsstaaten:
**AT BE CH CY DE DK ES FI FR GB GR IE IT LI LU MC NL PT SE TR**

(30) Priorität: **24.06.2000 DE 10030920**

(43) Veröffentlichungstag der Anmeldung:
**26.03.2003 Patentblatt 2003/13**

(73) Patentinhaber: **SanguiBioTech GmbH
58455 Witten an der Ruhr (DE)**

(72) Erfinder:
• **ZIRK, Kai
97772 Wildflecken (DE)**
• **BARNIKOL, Wolfgang
55128 Mainz (DE)**

(74) Vertreter: **Strych, Werner Maximilian Josef
Hansmann & Vogeser,
Patent- und Rechtsanwälte,
Albert-Rosshaupter-Strasse 65
81369 München (DE)**

(56) Entgegenhaltungen:
**DE-A- 4 124 920          DE-A- 19 624 844
DE-A- 19 815 932**

• **ERTAN-LAMONTAGNE M C ET AL: "POLYMER-COATED, TAPERED CYLINDRICAL ATR ELEMENTS FOR SENSITIVE DETECTION OF ORGANIC SOLUTES IN WATER" APPLIED SPECTROSCOPY, THE SOCIETY FOR APPLIED SPECTROSCOPY. BALTIMORE, US, Bd. 49, Nr. 8, 1. August 1995 (1995-08-01), Seiten 1170-1173, XP000523733 ISSN: 0003-7028**

EP 1 295 107 B1

**Beschreibung**

Gegenstand der Erfindung ist eine Vorrichtung mit den Merkmalen des Patentanspruchs 1.

In der chemischen und pharmazeutischen Industrie, aber auch in der Biotechnologie oder Umwelttechnik müssen zur Analyse der Zusammensetzung von Lösungen, oder zur Charakterisierung der Lösung häufig Eigenschaften der Lösungen oder der gelösten Bestandteile quantitativ gemessen oder bestimmt werden; Bestimmungs- oder Meßgrößen können u.a. die Konzentrationen, die Lichtabsorption oder die optische Aktivität sein. Wird zur Gehaltsbestimmung einer Komponente eines Mehrstoffgemisches eine physikalische Eigenschaft des zu untersuchenden Meßgutes gemessen, so wird deren Wert eventuell von anderen in der Flüssigkeit enthaltenen Bestandteilen beeinflußt. Ist die Meßgröße beispielsweise die optische Aktivität- sie verursacht eine Drehung der Schwingungsebene linear polarisierten Lichtes - so ist die spezifische Bestimmung der Konzentration eines Stoffes eines optisch aktiven Mehrstoffgemisches beim Vorhandensein mehrerer optisch aktiver Stoffe in der Lösung nur mit einen erheblichen Aufwand möglich, da die Komponenten zunächst stofflich - beispielsweise chromatographisch - separiert und dann einzeln vermessen werden müßten. Solche Verfahren sind sehr zeitraubend und unter Umständen auch ungenau, da die Trennung nicht immer vollständig möglich ist. Im Einzelfall kann ein Sensor oder eine Sonde, wie etwa ein Polarimeter, auf der Basis einer physikalischen Größe sehr sensitiv, aber zugleich sehr unspezifisch sein. In einem solchen Fall könnte eine "Multi-Sensor-Sonde", mit der mehrere physikalische Größen gleichzeitig bestimmt werden, Abhilfe schaffen. Mit ihrer Hilfe können die Konzentrationen der einzelnen Stoffe eines Mehrstoffgemisches unter gewissen Umständen ohne eine Stofftrennung schnell und zuverlässig bestimmt werden. Die Gehalte der relevanten Stoffe können dann durch die gleichzeitige Messung und geeignete Verrechnung der Meßwerte mehrerer physikalischer Meßgrößen relativ einfach und genau bestimmt werden. Darüber hinaus könnte ein Ausschlußverfahren in Form einer selektiven Membran zusätzlich Stoffe des Gemisches, die nicht erfaßt werden sollen, vom eigentlichen Sensor fernhalten, so daß sich die Anzahl der störenden Stoffe reduziert.

Doch nicht nur im technischen Bereich, sondern auch in der Medizin versucht man seit Jahren eine kombinierte Meßsonde zur spezifischen Bestimmung des Gehaltes einzelner Stoffe, beispielsweise der Glukose im Körperwasser, zu entwickeln. Dabei könnte eine solche "Multi-Sensor-Sonde" im ersten Schritt als eine in ein Gewebe insertierbare "Einstichsonde" für die kontinuierliche Bestimmung der Gtukbsekonzentration in der Klinik eingesetzt werden, um eine therapeutische Normalisierung des Glukosestoffwechsels zu erreichen. Im zweiten Schritt könnte eine Sonde gekoppelt mit einer Insulinpumpe, als Dauer-Implantat eine technische "Beta-Zelle" bilden, die eine exakte Stabilisierung des Glukosespiegels über Monate und Jahre hinweg gewährleistet und somit- die schwerwiegenden Folgeerscheinungen der diabetischen Erkrankung verhindern hilft.

Eine solche "Multi-Sensor-Sonde", den vorstehend genannten Ansprüchen gerecht werden könnte, ist in der Literatur bislang nicht beschrieben.

Aus der DE-A-41 24 920, welche den nächsten Stand der Technik offenbart, ist ein biochemischer Analysator mit einem Prisma für abgeschwächte Totalreflexion (ATR) bekannt. Dieser Analysator misst ausschließlich die abgeschwächte Totalreflexion eines Infrarotstrahls bezüglich einer flüssigen Probe.

Der Erfindung liegt die Aufgabe zu Grunde, eine geeignete miniaturisierbare Vorrichtung zur kombinierten und gleichzeitigen refraktometrischen und ART-Spektrometrischen Messung der Konzentration in flüssigem Meßgut zu entwickeln. Mittels der Werte dieser Meßgrößen soll die Konzentration eines Stoffes in einem Mehrstoffgemisch mit hoher Spezifität bestimmt werden. Dabei soll ein Ausschlußverfahren möglichst viele Bestandteile der Meßflüssigkeit, die nicht untersucht werden sollen, nicht in das eigentliche Meßgut hineinlassen.

Gelöst wird diese Aufgabe durch eine Vorrichtung gemäß Anspruch 1.

Anhand der Zeichnungen wird die erfindungsgemäße Vorrichtung näher beschrieben. Zum Verständnis möglicher Meßmethoden, zur Bestimmung von Konzentrationen sind diese nachfolgend angeführt.

1. Eine geeignete physikalische Methode zur Bestimmung von Konzentrationen ist die Spektrometrie oder Transmissionsmessung:
Breitet sich ein Lichtstrahl in einem absorbierenden Medium aus, nimmt die Lichtintensität I längs des Weges s (im Rahmen der linearen Optik) exponentiell ab. Eine Küvette der Schichtdicke d, die mit der Lösung einer absorbierenden Substanz von der Konzentration c gefüllt ist, wird von einem Lichtstrahl durchdrungen. Das Verhältnis der Intensitäten der von der Küvette durchgelassenen Lichtstrahlen mit einer lichtabsorbierenden gelösten Substanz in der Küvette ($I(d)$), und dem entsprechenden Wert ohne die Substanz ($I_0$) ist die Transmission T - sie kann mit dem LAMBERT-BEERschen Gesetz berechnet werden.

$$T = I(d) / I_0 = e^{-d \cdot c \cdot \kappa}$$

Der Proportionalitätsfaktor $\kappa$ ist der stoffspezifische Absorptionskoeffizient bei vorgegebener "Meß"-Wellenlänge. Wird T bei bekannter Schichtdicke und stoffspezifischem Absorptionskoeffizienten gemessen, so kann die Konzentration bestimmt werden. Um die Spezifität dieser Methode zu erhöhen, muß die Anzahl der "Meß"-Wellenlängen möglichst groß gewählt werden, so daß mehrere stoffspezifische Absorptionsbanden vermessen werden können. Der Einsatz mehrerer "Meß"-Wellenlängen gleichzeitig kann beispielsweise in der Weise erfolgen, man mehrere Strahlungsquellen mittels vielarmiger Lichtleiter oder durch dielektrische Strahlteiler zur Überlagerung bringt.

2. Eine weitere physikalische geeignete Methode zur Bestimmung von Konzentrationen ist die Polarimetrie: Durchstrahlt man ein optisch aktives Medium mit einer linear polarisierten elektromagnetischen Welle, so erfährt die Schwingungsebene dieser Welle eine Drehung. Der Winkel $\alpha$, um den die Schwingungsebene sich dreht, ist proportional zur Länge d des Weges durch das optisch aktive Medium und zur Konzentration c der optisch aktiven Substanz:

$$\alpha = k_{\lambda,T} \cdot c \cdot d$$

Der Proportionalitätsfaktor $k_{\lambda,T}$ ist die spezifische Drehung der optisch aktiven Substanz; sie ist auch von der Temperatur und der Wellenlänge der verwendeten Strahlung abhängig. Mißt man $\alpha$ bei bekannter Weglänge und spezifischer Drehung kann die Konzentration bestimmt werden. Um den Wert der Meßgröße $\alpha$ zu vergrößern, muß der Weg in geeigneter Weise verlängert werden. DE 198 15 932 A beschreibt dazu ein mögliches Verfahren.

3. Eine weitere physikalische geeignete Methode zur Bestimmung von Konzentrationen ist die Refraktrometrie : Tritt ein Strahl vom optisch dichteren ($n_1$) in ein optisch dünneres ($n_2$) Medium über, so gelangt die Energie der elektromagnetischen Welle nicht vollständig in das zweite Medium; ein Teil der Wellenenergie wird reflektiert, der andere gebrochen. Ab einem bestimmten Einfallswinkel $\varepsilon$, dem sogenannten Grenzwinkel $\varepsilon_g$ der Totalreflexion, gibt es keine Brechung mehr, die Welle wird dann vollständig reflektiert. Verwendet man z.B. linear polarisiertes Licht, so ergibt sich eine Aufspaltung in parallel und senkrecht zur Einfallsebene schwingenden Komponenten mit der Phasendifferenz $\Delta\varphi$. Im allgemeinen ändert sich die Phasendifferenz und somit auch der Polarisationszustand des Lichtes während des Reflexionsvorganges. Diese Phasendifferenz ist auch von den Brechzahlen der beiden Medien ($n_1$ und $n_2$) abhängig. Besteht das optisch dünnere Medium aus dem flüssigen Meßgut, so existiert folglich eine Beziehung zwischen der Brechzahl $n_2$ und den Konzentrationen der im Meßgut enthaltenen Stoffe. Für die Phasendifferenz gilt:

$$\tan\Delta\varphi/2 = (\cos \varepsilon \cdot (\sin^2\varepsilon - (n_2/n_1))^{0.5}) / \sin^2\varepsilon \quad \text{mit} \quad n_2 = f(\textstyle\sum c)$$

Der Winkel $\varepsilon$ ist der Einfallswinkel, der zwischen Lot und Grenzfläche liegt. Wird $\Delta\varphi$ direkt oder indirekt bei bekanntem Einfallswinkel und bekannter Brechzahl des optisch dichteren Mediums gemessen, können die Konzentrationen indirekt ermittelt werden. Um das Meßverfahren möglichst empfindlich zu gestalten, muß die Anzahl der Totalreflexionen möglichst groß gewählt werden.

4. Eine weitere physikalische geeignete Methode zur Bestimmung von Konzentrationen ist die Spektroskopie der Abschwächung der Totalreflexion (ATR: "attenuated total reflection").

Einen Sonderfall der Transmissionsmessung bildet die ATR, bei der eine Strahlversetzung an der Grenzschicht zwischen einem optisch dichteren Medium $n_1$ zu einem optisch dünneren Medium $n_2$ auftritt und wobei sich die elektromagnetische Welle über einem definierten Bereich des optisch dünneren Materials ausbreitet. Besteht das optisch dünnere Medium aus dem flüssigen Meßgut, so existiert wie zuvor eine Abhängigkeit zwischen Brechzahl $n_2$ und den Konzentrationen der im Meßgut enthaltenen Stoffe. Für die Eindringtiefe in das optisch dünnere Medium und somit für die Schichtdicke d gilt:

$$d = \lambda / (2 \cdot \pi \cdot n1 (\sin^2 \varepsilon - (n_2/n_1)^2)^{0.5}) \qquad n_2 = f(\textstyle\sum c)$$

$\lambda$ ist die Wellenlänge der verwendeten "Meß"-Stahlung. Der Winkel $\varepsilon$ ist der Einfallswinkel, der zwischen Lot und Grenzfläche anliegt. Wird die Transmission T bei gegebenem Einfallswinkel und bekannter Brechzahl des optisch dichteren Mediums gemessen, können die Konzentrationen indirekt bestimmt werden. Um den Wert der Meßgröße T zu erhöhen, muß die Anzahl der Totalreflexionen möglichst groß gewählt werden, damit die Absorptionsweglänge möglichst groß wird.

Bei geeigneter Wahl der verwendeten "Meß"-Strahlung aus dem elektromagnetischen Wellen-Spektrum, kann die Refraktrometrie und die ATR-Methode gleichzeitig mit einem einzigen verwendeten Meßstrahl durchgeführt werden. 5. Eine weitere physikalische geeignete Methode zur Bestimmung von Konzentrationen ist die Bestimmung der Leitfähigkeit.

Befindet sich beispielsweise eine Natriumchlorid-Lösung in einem homogenen elektrischen Feld, so greift eine Kraft auf die Z-wertigen Ionen an. Dies führt zu einer gleichförmigen Bewegung, da eine geschwindigkeitsproportionale Reibungskraft vorhanden ist. Die Geschwindigkeit ist proportional zum elektrischen Feld. Die Kationen "wandern" zur Kathode die Anionen zur Anode. Beide Ionensorten liefern einen positiven Beitrag zum Strom, da der "rückwärts" laufende Strom der negativen Anionen auch positiv zu werten ist. Für die Leitfähigkeit $\sigma$ gilt somit:

$$\sigma = j \cdot E$$

$j$ ist die Gesamtstromdichte, $E$ die elektrische Feldstärke des elektrischen Feldes. Wird die Leitfähigkeit $\sigma$ bei vorgegebener Feldstärke gemessen, kann die Konzentration indirekt bestimmt werden.

Die genannten physikalischen Methoden können in geeigneter Weise, je nach Anforderung an das Meßsystem in verschiedenen Kombinationen, in einer Meßsonde ihren Einsatz finden.

Anhand der beigefügten Zeichnungen werden bevorzugte einzelne Ausführungsformen der erfindungsgemäßen Vorrichtung, die auch miteinander kombiniert werden können, näher beschrieben.

Dabei ist

Fig. 1 eine schematische Darstellung einer Vorrichtung
Fig. 2 ein Schnitt entlang der Line A - A' der Fig. 1
Fig. 3 eine schematische Darstellung einer erweiterten Vorrichtung
Fig. 4 eine schematische Darstellung einer weiteren Ergänzung
Fig. 5 eine schematische Darstellung einer erweiterten Vorrichtung
Fig. 6 eine schematische Darstellung einer weiteren Modifikation
Fig. 7 ein Schnitt entlang der Line A - A' der Fig. 1 mit weiteren Ergänzungen

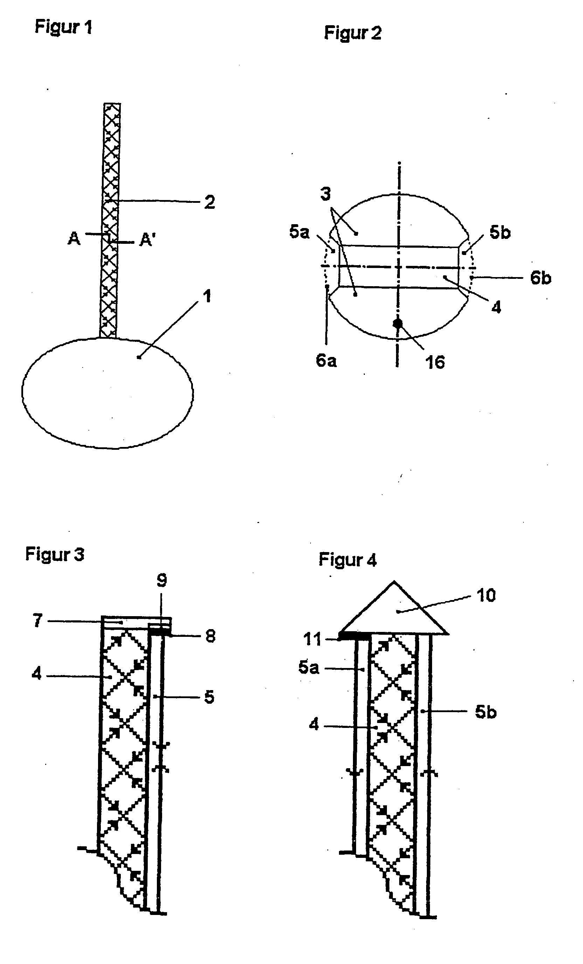

**Figur 1** zeigt schematisch das Kernstück einer erfindungsgemäßen Vorrichtung, die sich für eine refraktrometrische und gleichzeitiger ATR-spektrometrische Messung eignet. Sie besteht im wesentlichen aus einem Sensor-System (1) und einem Meßkörper (2). Im Inneren des Sensor-Systems (1) befinden sich die Strahlungsquellen, die Detektoren, die Signalwandler und die Signalverarbeitungs-Systeme mit Telemetrieeinheit und gegebenenfalls einem Energiespeicher. Insbesondere für eine Implantation können Meßkörper und Sensor-System aus zwei getrennten Teilen bestehen, welche dann durch Leitung(en) verbunden sind. Der Meßkörper (2) besteht, wie **Figur 2** näher zeigt, im besteht im wesentlichen aus einer Körperfassung (3), einem darin gelagerten, im Querschnitt viereckigen Reflexionskörper (4) sowie zwei an einander gegenüberliegenden Reflexionsseiten des Reflexionskörpers (4) angeordneten, sich über den ganzen Meßkörper in Längsrichtung erstreckenden Meßräumen (5a, 5b), die nach außen durch bidirektional permeable Membranen (6a, 6b) begrenzt sind. Diese Membranen sind in ihrer bevorzugten Ausführung nur für das zu messende Medium durchlässig. Der gemeinsame Meßstrahl für eine gleichzeitige refraktrometrische und ATR-spektrometrische Messung, der in den Reflexionskörper (4) eingestrahlt und innerhalb des Reflexionskörpers (4) durch Totalreflexionen geführt wird, tritt mit dem Meßgut an der Grenzschicht der beiden Medien in Wechselwirkung. Dabei erfährt der Meßstrahl die oben beschriebene Phasenverschiebung $\Delta\varphi$ mit gleichzeitiger Änderung der Intensität durch Wechselwirkung mit den zu untersuchenden Substanzen. Da die Anzahl der Totalreflexionen und die bevorzugte miniaturisierte Bauweise synergistisch wirken - je schmaler der Reflexionskörper, desto größer ist die Anzahl der Totalreflexionen pro Längeneinheit - ist diese Anordnung ein wesentlicher Bestandteil der Erfindung.

Die beschriebene Vorrichtung läßt sich der Art erweitern, daß eine zusätzlich polarimetrische Messung möglich ist. **Figur 3** zeigt eine solche Gestaltung, bei der die äußere Stirnseite eines Meßraumes (5) mit einer Reflexionsoptik (7) überdeckt ist. Diese Reflexionsoptik (7) kann vorzugsweise aus einer optischen Verzögerungsplatte (8) mit Reflexionsschicht (9) bestehen. Diese Optik verändert den Polarisationszustand des Meßstrahls nicht, sie dreht lediglich die Schwingungsebene des linear polarisierten Lichts um 90° gegenüber der Lage der Schwingungsebene vor der Reflexion. Dadurch wird erreicht, daß die Drehung der Schwingungsebene, die durch den optisch aktiven Stoff hervorgerufen wird, nach der Strahlumlenkung und dem erneuten Durchdringen durch den optisch aktiven Stoff nicht egalisiert wird.

**Figur 4** zeigt eine Gestaltung ähnlich der Fig. 3, bei der jedoch die Reflexionsoptik aus einem Umlenkprisma (10) mit Verzögerungsplatte (11) besteht und die Stirnseiten von zwei einander gegenüberliegenden Meßräumen überdeckt. Damit wird insgesamt eine polarisations- und richtungs-erhaftende Strahlumlenkung ermöglicht. Mit den Gestaltungen der Fig. 3 und 4 kann man gleichzeitig mit den zu Fig. 2 beschriebenen Messungen eine polarimetrische Messung durchführen, da ein zweiter Meßstrahl das Meßgut im "Meßraum" durchdringt, ohne dabei durch Strahlumlenkung seinen Polarisationszustand und die Orientierung der Hauptachse in Strahlrichtung gesehen zu ändern.

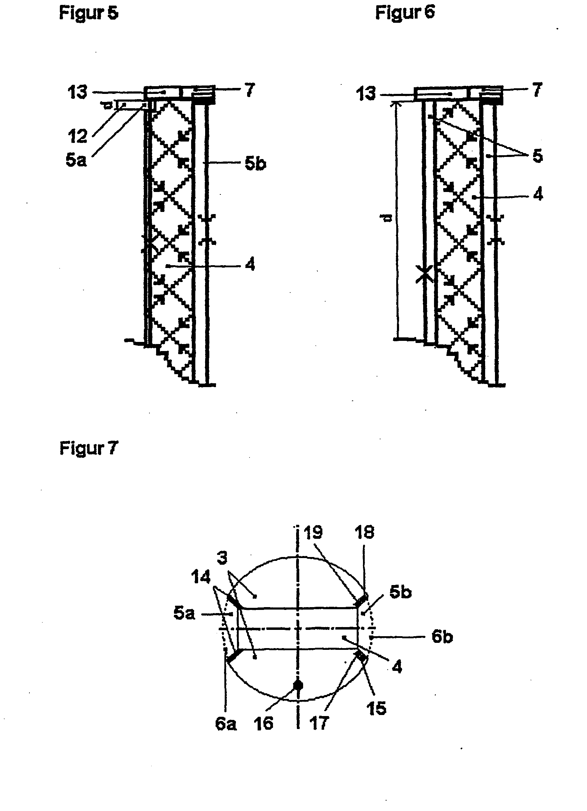

Die unter Figur 3 und 4 beschriebenen Vorrichtungen lassen sich nochmals erweitern, so daß zusätzlich eine spektrometrische Messung möglich ist. **Figur 5** zeigt eine solche Gestaltung ähnlich der Fig. 3, bei der jedoch zusätzlich an einer Seite am oberen Ende des Reflexionskörpers (4) eine Nut (12) mit der Breite d in den Reflexionskörper eingefügt ist, die eine Meßkamer (5a) bildet. In dieser Anordnung besteht die Reflexionsoptik zu einer Hälfte aus der zu Fig. 3 beschriebenen Reflexionsoptik (7), zur anderen Hälfte aus einer die "spektrometrische"-Meßstrahlung reflektierenden Reflexionsschicht (13). Hier überdeckt die Reflexionsoptik (7) nur eine Hälfte des oberen Endes des Reflexionskörpers (4) und eine Meßkammer (5b), so daß der Polarisationszustand des dort eingestrahlten Meßstrahls nicht verändert wird. Gleichzeitig ist durch einen in das Reflexionskörper parallel zu Längsachse eingestrahlten Meßstrahl eine spektroskopische Messung möglich.

**Figur 6** zeigt eine Gestaltung ähnlich der Fig. 5, bei der jedoch die Reflexionsoptik die äußeren Stirnseiten von zwei Meßräumen (5) überdeckt. In dieser Anordunung besteht die Reflexionsoptik zu einer Hälfte aus der in Fig. 3 beschriebenen Reflexionsoptik (7), zur anderen Hälfte aus einer die "spektrometrische" Meßstrahlung reflektierenden Reflexionsschicht (13). In einer erweiterten Ausführung ist auch eine Kombination aus den zu Fig. 5 und 6 beschriebenen Gestaltungen, möglich. Durch den erzielten "großen" Unterschied der Schichtdicke d können gelöste, absorbierende Substanzen eines großen Konzentrationsbereiches oder stark unterschiedlichen Absorptionsverhaltens mit der selben Sonde gemessen werden. Mit diesen Gestaltungen kann zusätzlich zu den vorstehend schon beschriebenen Messungen eine spektrometrische Messung gleichzeitig durchgeführt werden, da weitere Meßstrahlen das Meßgut im "Meßraum" durchdringen und dabei eine Intensitätsänderung erfahren. Dabei ist auch der Einsatz mehrerer Wellenlängen möglich.

Um mehrere der beschriebenen Meßmethoden mit eine Vorrichtung vornehmen zu können, ist es möglich, im Meßkörper (2) auch mehr als zwei Meßräume (5) anzuordnen.

Zur Bestimmung des Leitwert können, wie **Figur 7** zeigt, an den den Meßraum (5) begrenzenden Seitenflächen (14) der Körperfassung (3) Elektroden (15) angebracht werden. Damit kann ein elektrisches Feld erzeugt werden, dessen Feldlinien das Meßgut durchdringen. Anstelle der Elektroden können auch ionenselektive Feldeffekt-Transistoren (15) angebracht werdenDiese Methode der Leitwertbestimmung ist in Kombination mit allen zuvor beschrieben Gestaltungen möglich.

Neben den vorstehend beschriebenen Meß-Methoden ist es möglich, mit der erfindungsgemäßen Vorrichtung weitere Messungen gleichzeitig durchzuführen.

Man kann in der Körperfassung (3) auch einen Temperaturfühler (16) zur gleichzeitigen Temperaturmessung anordnen. Neben den Leitfähigkeitselektroden können an den Seitenflächen (14) der Meßräume (5) auch andere Sensoren, beispielsweise ein pH-Wert-Detektor (17), ein Sauerstoff-Detektor (18) zur Ermittlung des Sauerstoff-partialdrucks der umgebenden Lösung oder ein Kohlendioxid-Detektor (19) zur Ermittlung des Kohlendioxid-Partialdrucks, einzeln oder in Kombination, angeordnet sein.

Das Sensor-System (1) der erfindungsgemäßen Vorrichtung umfaßt die für die vorgesehenen Messungen erforderlichen Strahlungsquellen, die zur Signalauswertung benötigten Detektoren, Signalwandler, Telemetrieeinheit und Signalverarbeitungs- und -auswertungsvorrichtungen und die Energiequelle. Sofern eine räumliche Trennung der Meßkörpers vom Sensor-System gewünscht oder erforderlich ist, wie beispielsweise bei einer Implantation, umfaßt die Vorrichtung ferner die notwendigen Leitungsverbindungen oder geeignete Telemetrie-Einheiten.

Die verwendeten bidirektional permeablen Membranen (6) können gleiche oder unterschiedliche Molekulargewichts-Trenngrenzen besitzen.

Die Auswahl der Wellenlängen der Meßstrahlen liegt im Bereich des Fachwissens. Beispielsweise werden für den polarisierten Meßstrahl und spektroskopische Messungen eine Wellenlänge im Bereich von UV bis MIR bevorzugt und die Wellenlänge des Meßstrahls für polarimetrische Messungen liegt im Bereich vom UV bis VIS.

Die erfindungsgemäße Vorrichtung erlaubt insbesondere eine stark miniaturisierte Bauweise der gesamten Meßvorrichtung, die so beispielsweise zur kontinuierlichen und sehr spezifischen Messung der Blutglukosekonzentration einem Menschen insertiert oder implantiert werden kann. Andere Anwendungsbereiche sind die Überwachung insbesondere chemischer Verfahrensabläufe oder deren Regelung und die Überwachung und Steuerung biotechnologischer Prozesse in Bioreaktoren. Ein weiteres Einsatzgebiet sind Mikroreaktoren, in denen herkömmliche Meßanordnungen aus Dimensionsgründen oder nicht ausreichender Spezifität und/oder Selektivität nicht einsetzbar sind.

**Patentansprüche**

1. Messvorrichtung zur gleichzeitigen refraktrometrischen und ATRspektrometrischen Messung der Konzentration flüssiger Medien, insbesondere in miniaturisierter Bauform, umfassend
ein Sensor-System (1) mit

- wenigstens einer Strahlungsquelle,
- Detektoren,
- Signalwandlern und
- Signalverarbeitungssystemen,

und einen länglichen Messkörper (2), wobei der Messkörper (2) besteht aus

- einer Körperfassung (3), und
- einem länglichen Reflexionskörper (4), der in der Körperfassung (3) gelagert ist und einen viereckigen Querschnitt aufweist, wobei der Messkörper (2) einen ersten sich über den ganzen Messkörper (2) in Längsrichtung erstreckenden Messraum (5a) aufweist, der an einer ersten Reflexionsseite des Reflexionskörpers (4) angeordnet und nach außen durch eine erste bidirektional permeable Membran (6a) begrenzt ist und der Reflexionskörper (4) dergestalt ist, daß er den Mess-Strahl unter Totalreflektion zwischen der ersten Reflexionsseite und einer zweiten Reflexionsseite, die der ersten Reflexionsseite gegenüberliegt, führt,

**dadurch gekennzeichnet, dass**
die Strahlungsquelle zur Erzeugung eines polarisierten Mess-Strahls ausgelegt ist, der gleichzeitig eine refraktrometrische und ATR-spektrometrische Messung ermöglicht, der Messkörper (2) einem weiteren sich über den ganzen Messkörper (2) in Längsrichtung erstreckenden Messraum (5b) an der zweiten, der ersten Reflexionsseite gegenüberliegenden Reflexionsseite des Reflexionskörpers (4) aufweist, der nach außen durch eine weitere bidirektional permeable Membran (6b) begrenzt ist.

2. Messvorrichtung nach Anspruch 1, wobei ein oder mehrere weitere Messräume (5c, 5d) mit ebenfalls bidirektional permeablen Membranen (6c, 6d) am Messkörper (2) angeordnet sind.

3. Messvorrichtung nach Anspruch 1 oder 2, wobei die äußere Stirnseite eines oder mehrerer Messräume mit einer Reflexionsoptik (7) überdeckt ist.

4. Messvorrichtung nach einem der Ansprüche 1 bis 3, wobei die äußere Stirnseite eines Messraumes mit einer optischen Verzögerungsplatte (8) mit Reflexionsschicht (9), überdeckt ist.

5. Messvorrichtung nach einem der Ansprüche 1 bis 3, wobei die äußeren Stirnseiten von zwei einander gegenüber liegenden Messräumen von einem optischen Umlenkprisma (10) mit einer optischen Verzögerungsplatte (11) überdeckt sind.

6. Messvorrichtung nach einem der Ansprüche 1 bis 5, wobei der Reflexionskörper (4) an einer Seite am oberen Ende eine Nut (12) aufweist, aber der eine Reflexionsschicht (13) angeordnet ist.

7. Messvorrichtung nach einem der Ansprüche 1 bis 6, wobei die äußere Stirnseite von einem oder mehreren Messräumen mit einer Reflexionsschicht (13) überdeckt ist.

8. Messvorrichtung nach einem der Ansprüche 1 bis 7, wobei an einer einen Messraum (5a, 5b) begrenzenden Seitenfläche (14) der Körperfassung (3) Elektroden oder ionenselektive Feldeffekt-Transistoren (15) zur Leitwertmessung angeordnet sind.

9. Messvorrichtung nach einem der Ansprüche 1 bis 8, wobei in der Körperfassung (3) ein Temperaturfühler (16) angeordnet ist.

10. Messvorrichtung nach einem der Ansprüche 1 bis 9, wobei in der Körperfassung (3) ein pH-Wert-Detektor (17) angeordnet ist.

11. Messvorrichtung nach einem der Ansprüche 1 bis 10, wobei in der Körperfassung (3) ein Sauerstoffdetektor (18) zur Ermittlung des Sauerstoff-Partialdrucks angeordnet ist.

12. Messvorrichtung nach einem der Ansprüche 1 bis 11, wobei in der Körperfassung (3) ein Kohlendioxid-Detektor (19) zur Ermittlung des Kohlendioxid-Partialdruckes angeordnet ist.

13. Messvorrichtung nach einem der Ansprüche 1 bis 12, wobei das Sensor-System (1) räumlich vom Messkörper (2) getrennt und die Mess-Strahlen und/oder Messsignale durch geeignete Verbindungen übermittelt werden.

**14.** Messvorrichtung nach einem der Ansprüche 1 bis 13, wobei das Sensor-System (1) eine Telemetrieeinheit und einen Energiespeicher umfasst

**15.** Messvorrichtung nach Anspruch 1 bis 14, wobei die bidirektional permeablen Membranen (6c, 6d) gleiche oder jeweils unterschiedliche Molekulargewichts-Trenngrenzen wie die Membranen (6a, 6b) besitzen.

**16.** Vorrichtung nach Anspruch 1 bis 15,
**dadurch gekennzeichnet, dass**
die Strahlungsquelle zur Erzeugung ‚eines polarisierten Mess-Strahls ausgelegt ist, der im Wellenlängenbereich von UV bis MIR liegt.

**17.** Vorrichtung nach Anspruch 1 bis 16,
**dadurch gekennzeichnet, dass**
die Strahlungsquelle zur Erzeugung eines Mess-Strahls für die polarimetrische Analyse ausgelegt ist, der im Wellenlängenbereich von UV bis VIS liegt.

**18.** Vorrichtung nach Anspruch 1 bis 17,
**dadurch gekennzeichnet, dass**
die Strahlungsquelle zur Erzeugung eines/mehrerer Mess-Strahls/en für die spektrometrische Analyse ausgelegt ist, der/die im Wellenlängenbereich von UV bis MIR angeordnet ist/sind.

**19.** Verwendung der Messvorrichtung nach einem der Ansprüche 1 bis 18 zur Überwachung und Regelung von chemischen Prozessen.

**20.** Verwendung der Messvorrichtung nach einem der Ansprüche 1 bis 18 zur in vivo-Messung der Glukosekonzentration im menschlichen Körper.

**21.** Verwendung der Messvorrichtung nach einem der Ansprüche 1 bis 18 zur Überwachung biotechnologischer Prozesse in Bio-Reaktoren.

**Claims**

**1.** Measuring device for simultaneous refractometric and ATR spectrometric measurement of the concentration of fluid media, especially in miniaturised design, comprising
a sensor system (1) having

- at least one radiation source,
- detectors
- signal transducers and
- signal processing systems,

and an elongate measuring body (2), wherein the measuring body (2) consists of

- a body frame (3), and
- an elongate reflection body (4), which is mounted in the body frame (3) and has a quadrilateral cross section, wherein the measuring body (2) comprises a first measuring space (5a) extending over the entire measuring body (2) in the longitudinal direction, which is arranged on a first reflection side of the reflection body (4) and is outwardly bounded by a first bidirectionally permeable membrane (6a), and the reflection body (4) is configured so that it guides the measuring beam with total reflection between the first reflection side and a second reflection side, which lies opposite the first reflection side,

**characterised in that** the radiation source is designed to generate a polarised measuring beam which allows both refractometric and ATR spectrometric measurement, the measuring body (2) comprises a further measuring space (5b) extending over the entire measuring body (2) in the longitudinal direction, which is arranged on the second reflection side of the reflection body (4) opposite the first reflection side and is outwardly bounded by a further bidirectionally permeable membrane (6b).

2. Measuring device according to Claim 1, wherein one or more further measuring spaces (5c, 5d) also with bidirectionally permeable membranes (6c, 6d) are arranged on the measuring body (2).

3. Measuring device according to Claim 1 or 2, wherein the outer end side of one or more measuring spaces is covered with reflection optics (7).

4. Measuring device according to one of Claims 1 to 3, wherein the outer end side of a measuring space is covered with an optical retardation plate (8) having a reflection layer (9).

5. Measuring device according to one of Claims 1 to 3, wherein the outer end sides of two mutually opposite measuring spaces are covered with an optical deviating prism (10) having an optical retardation plate (11).

6. Measuring device according to one of Claims 1 to 5, wherein the reflection body (4) has a groove (12) at the upper end on one side, above which a reflection layer (13) is arranged.

7. Measuring device according to one of Claims 1 to 6, wherein the outer end side of one or more measuring spaces is covered with a reflection layer (13).

8. Measuring device according to one of Claims 1 to 7, wherein electrodes or ion-selective field-effect transistors (15) for conductance measurement are arranged on a side face (14) of the body frame (3), which bounds a measuring space (5a, 5b).

9. Measuring device according to one of Claims 1 to 8, wherein a temperature sensor (16) is arranged in the body frame (3).

10. Measuring device according to one of Claims 1 to 9, wherein a pH detector (17) is arranged in the body frame (3).

11. Measuring device according to one of Claims 1 to 10, wherein an oxygen detector (18) for determining the oxygen partial pressure is arranged in the body frame (3).

12. Measuring device according to one of Claims 1 to 11, wherein a carbon dioxide detector (19) for determining the carbon dioxide partial pressure is arranged in the body frame (3).

13. Measuring device according to one of Claims 1 to 12, wherein the sensor system (1) is spatially separated from the measuring body (2) and the measuring beams and/or measurement signals are conveyed by suitable connections.

14. Measuring device according to one of Claims 1 to 13, wherein the sensor system (1) comprises a telemetry unit and an energy store.

15. Measuring device according to one of Claims 1 to 14, wherein the bidirectionally permeable membranes (6c, 6d) have equal or respectively different molecular weight separation limits than the membranes (6a, 6b).

16. Device according to Claim 1 to 15, **characterised in that** the radiation source is designed to generate a polarised measuring beam which lies in the UV to MIR wavelength range.

17. Device according to Claim 1 to 16, **characterised in that** the radiation source is designed to generate a measuring beam for polarimetric analysis, which lies in the UV to VIS wavelength range.

18. Device according to Claim 1 to 17, **characterised in that** the radiation source is designed to generate one or more measuring beam(s) for spectrometric analysis, which lie(s) in the UV to MIR wavelength range.

19. Use of the measuring device according to one of Claims 1 to 18 for monitoring and regulating chemical processes.

20. Use of the measuring device according to one of Claims 1 to 18 for measuring the glucose concentration in vivo in the human body.

**21.** Use of the measuring device according to one of Claims 1 to 18 for monitoring biotechnological processes in bioreactors.

**Revendications**

**1.** Dispositif de mesure pour la mesure réfractrométrique et ATR-spectrométrique simultanée de la concentration de milieux liquides, notamment dans une forme de réalisation miniaturisée, comprenant
un système de détection (1) comprenant

- au moins une source de rayonnement,
- des détecteurs,
- des transformateurs de signaux, et
- des systèmes de traitement de signaux,

et un corps de mesure allongé (2), le corps de mesure (2) étant constitué par

- une monture (3) du corps, et
- un corps réfléchissant allongé (4), qui est monté dans la monture (3) du corps et possède une section transversale quadrangulaire, dans lequel le corps de mesure (2) possède un premier espace de mesure (5a) qui s'étend dans la direction longitudinale sur la totalité du corps de mesure (2), est disposé sur un premier côté réfléchissant du corps réfléchissant (4) et est limité vers l'extérieur par une première membrane perméable de façon bidirectionnelle (6a), et le corps réfléchissant (4) est agencé de telle sorte qu'il guide le faisceau de mesure sous réflexion totale entre le premier côté réfléchissant et un second côté réfléchissant, qui est situé en vis-à-vis du premier côté réfléchissant,

**caractérisé en ce que**
la source de rayonnement est agencée pour produire un faisceau de mesure polarisé, qui permet simultanément une mesure réfractrométrique et ATR-spectrométrique, que le corps de mesure (2) possède un autre espace de mesure (5b) qui s'étend dans la direction longitudinale sur l'ensemble du corps de mesure (2), sur le côté réfléchissant du corps réfléchissant (4) qui est situé en vis-à-vis du premier côté réfléchissant et qui est limité vers l'extérieur par une autre membrane perméable de façon bidirectionnelle (6b).

**2.** Dispositif de mesure selon la revendication 1, dans lequel un ou plusieurs autres espaces de mesure (5c, 5d) comportant des membranes (6c,6d) également perméables de façon bidirectionnelle sont disposés sur le corps de mesure (2).

**3.** Dispositif de mesure selon la revendication 1 ou 2, dans lequel la face frontale extérieure d'un ou de plusieurs autres espaces de mesure est recouverte par un système optique réfléchissant (7).

**4.** Dispositif de mesure selon l'une des revendications 1 à 3, dans lequel la face frontale extérieure d'un espace de mesure est recouverte par une plaque de retardement optique (8) comportant une couche réfléchissante (9).

**5.** Dispositif de mesure selon la revendication 1 à 3, dans lequel les faces frontales extérieures de deux espaces de mesure situés réciproquement en vis-à-vis sont recouvertes par un prisme de renvoi optique (10) comportant une plaque de retardement optique (11).

**6.** Dispositif de mesure selon l'une des revendications 1 à 5, dans lequel le corps réfléchissant (4) comporte, d'un côté, à son extrémité supérieure, une rainure (12), au-dessus de laquelle est disposée une couche réfléchissante (13).

**7.** Dispositif de mesure selon l'une des revendications 1 à 6, dans lequel la face frontale extérieure d'un ou de plusieurs espaces de mesure est recouverte par une couche réfléchissante (13).

**8.** Dispositif de mesure selon l'une des revendications 1 à 7, dans lequel sur une surface latérale (14), qui délimite un espace de mesure (5a,5b) de la monture (3) du corps des électrodes ou des transistors à effet de champ (15), sélectifs vis-à-vis des ions, pour la mesure de la conductance.

**9.** Dispositif de mesure selon l'une des revendications 1 à 8, dans lequel un capteur de température (16) est disposé dans la monture (3) du corps.

10. Dispositif de mesure selon l'une des revendications 1 à 9, dans lequel un détecteur (17) de la valeur du pH est disposé dans la monture (3) du corps.

11. Dispositif de mesure selon l'une des revendications 1 à 10, dans lequel un détecteur d'oxygène (18) est disposé dans la monture (3) du corps pour déterminer la pression partielle d'oxygène.

12. Dispositif de mesure selon l'une des revendications 1 à 11, dans lequel un détecteur de gaz carbonique (19) est disposé dans la monture (3) du corps pour déterminer la pression partielle de gaz carbonique.

13. Dispositif de mesure selon l'une des revendications 1 à 12, dans lequel le système de détection (1) est séparé spatialement du corps de mesure (2) et les faisceaux de mesure et/ou les signaux de mesure sont transmis par l'intermédiaire de liaisons appropriées.

14. Dispositif de mesure selon l'une des revendications 1 à 13, dans lequel le système de détection (1) comprend une unité de télémétrie et un accumulateur d'énergie.

15. Dispositif de mesure selon les revendications 1 à 14, dans lequel les membranes (6c,6d) perméables de façon bidirectionnelle possèdent les mêmes limites de séparation de poids moléculaire que les membranes (6a, 6b) ou des limites respectivement différentes.

16. Dispositif de mesure selon les revendications 1 à 15, **caractérisé en ce que** la source de rayonnement est conçue pour produire un faisceau de mesure polarisé, qui est situé dans la gamme des longueurs d'onde allant des UV aux MIR.

17. Dispositif de mesure selon les revendications 1 à 16, **caractérisé en ce que** la source de rayonnement est conçue pour produire un faisceau de mesure pour l'analyse polarimétrique, qui se situe dans la gamme des longueurs d'onde allant des UV au VIS.

18. Dispositif de mesure selon les revendications 1 à 17, **caractérisé en ce que** la source de rayonnement est conçue pour produire un / plusieurs faisceau(x) de mesure pour l'analyse spectrométrique qui est / sont situé(s) dans la gamme des longueurs d'onde allant des UV aux MIR.

19. Utilisation du dispositif de mesure selon l'une des revendications 1 à 18 pour le contrôle et la régulation de processus chimiques.

20. Utilisation du dispositif de mesure selon l'une des revendications 1 à 18 pour la mesure in vivo de la concentration de glucose dans le corps humain.

21. Utilisation du dispositif de mesure selon l'une des revendications 1 à 18 pour le contrôle de processus biotechnologiques dans des bioréacteurs.

## Figur 1

## Figur 2

## Figur 3

## Figur 4

**Figur 5**

**Figur 6**

**Figur 7**